# EUROPEAN PATENT SPECIFICATION

(11) **EP 0 272 941 B1**
(45) Date of publication and mention of the grant of the patent: **31.08.1994**
(21) Application number: 87311417.7
(22) Date of filing: 23.12.1987
(51) Int. Cl.: D06P 1/52, D06P 5/22, D06M 15/564

(54) **Process for improving the dyeability of woven or non-woven textiles**
Verfahren zur Verbesserung der Anfärbbarkeit von gewebten oder ungewebten Stoffen
Procédé pour améliorer l'affinité pour les colorants de tissus tissés ou non tissés

(30) Priority: 24.12.1986 IT 2286486
(43) Date of publication of application: 29.06.1988
(73) Proprietor: AUSCHEM S.p.A., 20134 Milano (IT)
(72) Inventor: Prelini, Cesare, I-20030 Seveso (MI) (IT); Trovati, Aldo, I-28100 Novara (IT); Gambini, Tiziana, I-21053 Castellanza (Varese) (IT); Stefanoli, Vittorio, I-21052 Busto Arsizio (Varese) (IT)
(74) Representative: Luksch, Giorgio, Dr.-Ing.

(56) References cited:
- EP-A- 0 098 752
- WO-A-83/01262
- DE-A- 3 719 502
- FR-A- 2 371 541
- US-A- 3 686 108
- US-A- 4 421 826
- ORGANIC COATING PLASTIC CHEMISTRY, vol. 41, 1979, pages 270-276; J.L. OHLSON et al.:"The use of waterborne urethane latex as a binder in the dyeing of polypropylene"

## Description

The present invention relates to a process for improving the dyeability of woven or non-woven textiles.

Various processes are known for the finishing and/or dyeing of woven or non-woven textile materials.

For instance in "Coated Fabrics Technology", Technomic Publishing Co. (1973), "Urethanes as Textile Finisher", Pages from 109 to 120, W.G. Wolfang, or in the GB-A-1,419,264 and GB-A-1,418,550, US-A-3,709,864 and DE-A-1,504,733, there are described processes for surface improvement by impregnation and/or coagulation using polyurethanes. These processes generally comprise the use of essentially linear polyurethanes, dissolved in polar solvents, such as dimethylformamide, dimethylacetamide or dioxane, optionally mixed with ketones, alcohols or aromatic hydrocarbons.

The above polyurethane solutions generally need pigmentation with inorganic or organic pigments before their application, since manufactured textile articles must be dyed in a wide range of colours.

These methods of treatment suffer from a number of disadvantages, namely:
(a) the need to work with a solvent with the associated problems of flammability and minimization of environmental pollution;
(b) the need for frequent changes of colour with resultant difficult cleaning of the apparatus; and
(c) the manufactured articles generally have lower performances in terms of colour and dry washing fastness.

As an alternative to the above mentioned methods, it has proposed (J.M. Miley and P.D. Moore, "Reactive Polymeric Colorants for polyurethanes" Proceedings of the S.P.I. 26th Annual Technical Conference, San Francisco, CA, 1981, pages 83-86) to use polyurethanes obtained from polyols containing chromophoric groups chemically linked to the chain.

However, in this case also, the dyeing treatment is not free of disadvantages, especially disadvantages (a) and (b) mentioned above, in that the polyurethanes which can be obtained from such polyols must always be used with solvents.

Treatment of already dyed textiles with polyurethanes is disclosed in WO-A-8301262. Treatment of textiles with functional polyurethanes (which may be blocked) is disclosed in US-A-4421862 and in Organic Coating Chemistry, vol 41, 1979 at pages 270-276.

It has now been found, in accordance with the present invention, that the above mentioned disadvantages may be overcome by a process for improving the dyeability of a woven or non-woven textile which comprises treating the textile, before dyeing, with an aqueous dispersion of a polyurethane having cationic groups randomly distributed in the macromolecule, comprising the reaction product of organic diisocyanate and a mixture comprising a macroglycol and a diol containing a cationisable nitrogen atom, further reacted with an acid or cationising agent.

Preferred aqueous dispersions are those in which the polyurethane contains cationic groups of the ammonium type in an amount of 15 to 100 milliequivalents per 100 g of polyurethane (on a dry basis).

Alternatively, the aqueous dispersions may comprise cationic polyurethane having side or end polyether chains, preferably polyoxyethylene chains, which give thermocoagulability and higher resistance to electrolytes. In this case, too, the cationic groups are preferably present in an amount of from 15 to 100 milliequivalents per 100 grams of dry polyurethane.

The side or end polyether chains suitably have an average molecular weight of from 500 to 2,000, preferably from 500 to 1000, and are suitably present in amounts of from 4% to 15% by weight, based on the dry polyurethane.

The polyurethane dispersions used according to the present invention suitably have a solids content above 10% by weight, preferably between 10 and 50% by weight.

The polyurethane dispersion may be applied to textile material by known techniques such as, for example, air-knife or roller coating, printing, spraying, impregnation, coagulation or so-called "transfer coating" in such a manner that the polyurethane may serve both as binder and as dyeing aid with a specified class of dyestuffs.

The textile article treated with the polyurethane dispersion is suitably dried in a hot air stream, preferably between 80 and 120°C; and the article may then be further heat-treated, at a temperature of from 130°C to 160°C, for a time of from 1 to 5 minutes.

In the case of textiles based on cellulosic fibres it is possible to apply the dispersed polyurethane by the exhaustion technique with organic and inorganic acids added to the dispersion in low concentrations, such as for instance below 2 g/l. In this case, the dyeing is preferably carried out in circulating bath apparatus at a temperature of from 30 to 70°C until the dispersion is fully exhausted (20 to 60 minutes). The treated manufactured articles are then dried at a temperatures of from 30 and 130°C.

Yarns based on cellulosic fibres treated with a polyurethane dispersion in accordance with the invention may be used for the fabrication of woven or non-woven textile articles together with untreated cellulosic or other yarns.

The subsequent dyeing operations are carried out by known techniques such as, for instance, exhaustion dyeing, pad-batch, pad-roll, pad-steam, et.

Textile articles which may be treated in accordance with the invention are those based on natural fibres, such as wool, cotton, linen, silk, etc.; those based on artificial fibres such as, for instance, regnerated cellulose fibres; those based on synthetic fibres such as acrylics, polyamides, polyesters, polyolefines etc.; or those based on mixed fibres.

Advantages derived from the use of the polyurethane dispersions used in the present process are:
1. the polyurethanes are dispersed in water, substantially free from organic solvents, and stable to the presence of cationic groups distributed along the macromolecule;
2. the dyeing of the manufactured article is carried out after treatment with the dispersed polyurethane, so that it is possible to prepare a large stock of treated fabrics, which can be later dyed with the desired colour, thus avoiding any difficult and time-consuming cleaning operations to change colour;
3. the colour fastness to washing and to dry cleaning are generally very good due to the high mechanical and hydrolytic resistance of the polyurethane, and due to the high affinity that the cationic polyurethane shows to anionactive dyestuffs of the acid type, premetalized 1:1, premetalized 1:2, or reactive chromium based (good dyeing properties are also obtained with a selection of direct dyestuffs);
4. the possibility of using the same types of dyestuffs independent of the nature of the substrate, which can consist of mixtures of fibres (cellulose, polyamide, polyester, polypropylene fibres, etc.), since the affinity of the dyestuffs is particularly to the polyurethane.

Aqueous dispersions of polyurethanes containing cationic groups in the macromoluecule, preferably cationic groups of the ammonium type, are obtained according to known processes, such as those described in US-A-3,686,108 or in EP-A-0 098,752. According to the above processes, organic diisocyanates of the general formula:

OCN - R - NCO (I)

wherein R is an aliphatic, cycloaliphatic or aromatic radical containing from 4 to 18 C atoms, are reacted with a mixture comprising at least one macroglycol and at least one diol containing a cationizable atom, preferably a nitrogen atom.

Any diisocyanate of formula (I) may be used to prepare the polyurethane dispersions used in the dyeing process of the present invention, although aliphatic or cycloaliphatic diisocyanates are preferred.

Examples of particularly suitable diisocyanates for the preparation of the polyurethane dispersions are tetramethylenediisocyanate, 1,6-hexanediisocyanate, cyclohexane-1,3 and 1,4 diisocyanate, 1-isocyanato-3-isocyanatomethyl-3,5,5-trimethylcyclohexane, and 4,4ʹ-diisocyanato-dicyclohexylmethane.

As macroglycols, there may be used compounds having molecular weights of from 500 to 3000, preferably from 800 to 2,000, these compounds being based on:
1. dihydroxylated polyesters obtained by the polycondensation of aliphatic and aromatic dicarboxylic acids or anhydrides, (such as succinic, adipic. sebacic, azelaic, phthalic, isophthalic or terephthalic acids or anhdydrides) with glycols (such as ethylene or propylene glycol, 1,3- and 1,4-butanediol, 1,6-hexanediol or neopentyl glycol);
2. dihydroxylated polyethers such as polymers and copolymers of ethylene oxide, propylene oxide, tetrahydrofuran, butylene oxide and epichlohydrin obtained by the polyaddition to diolic starters of bisphenols;
3. polycaprolactones obtained by the polyaddition of ε-caprolactone to diolic starting material;s and
4. polycarbonates, obtained by the phosgenation of diols such as those mentioned above.

Preferred macroglycols are those of the polyester type and polyethers derived from tetrahydrofuran.

Preferred diols containing cationizable atoms are those of the formulae: 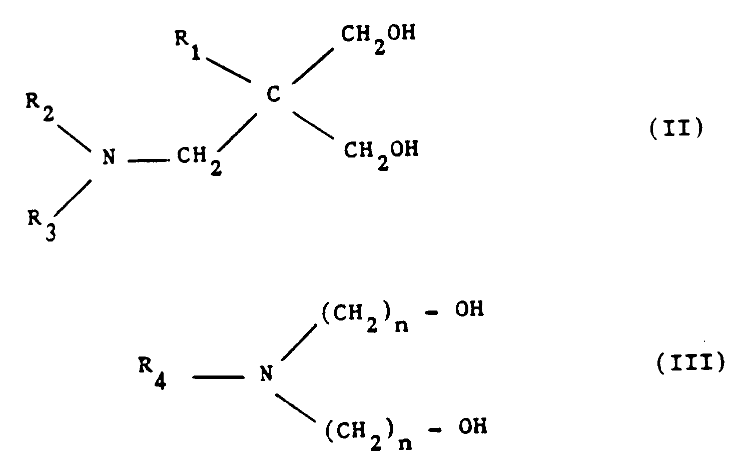
wherein R₁ is a C₁-C₅ alkyl radical, R₂ is a C₁-C₄ alkyl radical. R₃ is a C₁-C₁₈ alkyl radical, R₄ is a C₁-C₁₂ alkyl radical and n is an integer of from 1 to 4. Examples of such diols are 2-methyl-2-dimethylaminomethyl-1,3-propanediol, 2-methyl-2-diethylaminomethyl-1,3-propanediol, 2-ethyl-2-dimethylaminomethyl-1,3-propanediol and 2-ethyl-2-diethylaminomethyl-1,3-propanediol, methyl-diethanolamine, methyl-dimethanolamine, ethyl-dimethanolamine and ethyl-diethanolamine, etc.

To produce the desired polyurethane the diisocyanates, macroglycols and the cationizable diols are reacted so that the ratio between NCO and OH groups is from 1.2 to 2.5, preferably from 1.3 to 1.7. The reaction temperature is preferably below 150°C.

The thus obtained polyurethane is then cationized by treatment with an aqueous solution of organic or inorganic acid, such as acetic acid, chloroacetic acid, formic acid, phosphoric acid, sulfuric acid, or hydrochloric acid or by treatment with a cationizing substance such as an alkyl halide (e.g. methyl hydride, ethyl bromide, or n-butyl chloride) or a dialkyl sulphate such as dimethyl sulphate.

The cationizing agents can be used in solution in suitable solvents, preferably water-miscible solvents, such as acetone, methyl-ethylketone, tetrahydrofuran, etc. The cationizing agents are suitably used in equivalent quantities calculated on the total of cationizable atoms in the polyurethane.

Aqueous dispersions of polyurethanes also containing, in addition to cationic groups, side or end polyethereal chains can be obtained according to the process described in EP-A98752 with a modification for introducing polyethereal chains in the side or end positions. The introduction of these latter is carried out using monofunctional polyethers prepared as described in US-A-3,905,929 and US-A-3,920,598, i.e. by the alkoxylation of monovalent alcohols (such as methanol and butanol) with ethylene oxide and/or propylene oxide. The molecular weight of the monofunctional polyethers is suitably from 500 to 2,000, preferably from 500 to 1,000 and examples of the monofunctional polyethers are the methyl or butyl monoethers of polyoxyethyleneglycol as such or copolymerized with propylene oxide.

The incorporation of the monofunctional polyether into the polyurethane is preferably carried out at the same time as the functionalization of the polyisocyanate prepolymer during reaction with a hydroxyalkyl acrylate in the process of EP-A1-98752.

More particularly, this process comprises the following steps:
(a) a mixture comprising a diol containing cationizable groups and an essentially linear macroglycol, having a molecular weight of from 500 to 5,000, and of the polyether-polyol and/or polyester-polyol type, is reacted, at a temperature not higher than 100°C, with an excess of diisocyanate (-NCO/-OH ratio in equivalents between 1.2 and 2), to give a prepolymer containing free isocyanate groups;
(b) the polyisocyanate prepolymer is then converted into an oligourethane containing ethylenically unsaturated end groups, by reaction with a compound containing hydroxyl groups reactive with the isocyanate group and having the formula: 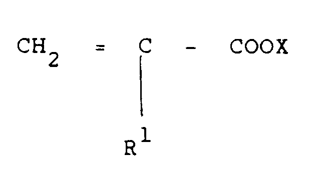 (wherein R¹ is H or CH₃, and X is a hydroxyalkyl radical), and with the monofunctional polyether in a molar amount below 10%;
(c) the resultant oligourethane is salified to convert the tertiary nitrogen atoms into hydrophilic cations; and
(d) the dispersed unsaturated oligourethane is polymerized in aqueous dispersion, in the presence of a free radical catalyst, at a temperature not higher than 100°C, to give an aqueous dispersion of a polyurethane containing polyether side or end chains, the degree of crosslinking of which may be adjusted by the optional addition of comonomers during the polymerization.

In order that the invention may be well understood the following examples are given by way of illustration only.

### EXAMPLE 1

Into a reactor, heated by an oil heater, provided with a stirrer and cooler and kept under a dry nitrogen atmosphere, there were introduced 1061.8 g (1.302 moles) of a polyester derived from adipic acid and a 50/50 (by weight) mixture of ethylene glycol and 1.4-butanediol (OH number, 137.6 mg KOH/g; acid number, 0.2 mg KOH/g) and 72.67 g of granulated urea. The heterogeneous mixture was dehydrated by heating at 110°C under reduced pressure (about 7.5 mbar (10 mmHG)). After cooling to about 45°C, there were added 25.26 g (0.212 moles) of methyldiethanolamine, 0.3 g of benzoyl chloride and 355.77 g (2.117 moles) of 1,6-hexanediisocyanate.

The reaction mixture was then gradually heated to 135°C over 120 minutes and maintained at this temperature for a further 60 minutes. After the addition of 135 g of butoxyethanol, and having cooled to about 115-120°C, the mixture was salified by the addition, over 15 minutes, of a solution of 20.8 g of phosphoric acid in 640 g of deionized water, with efficient agitation. A further 560 g of deionized water were then added and the whole was kept at a constant temperature of 60°C. Thereafter, 181.6 g of 36% aqueous formaldehyde diluted with 236 g of deionized water were added; a further 710 g of deionized water were added; the temperature was gradually raised to 90°C and the whole was maintained at this temperature for 60 minutes. The resultant milky dispersion had a solids content of 40% by weight; the cationic polyurethane had a quaternary ammonium group content of 13.3 milliequivalents per 100 g of dry Polyurethane.

### EXAMPLE 2

The apparatus employed was similar to that used in Example 1. 1281.3 Grams (1.322 moles) of a polyoxytetramethyleneglycol (a commercial product manufactured by Du Pont under the trade name Terathane 1000) having a hydroxyl number of 115.7 mg KOH/g were dehydrated under vacuum, as described in Example 1. At about 40°C, 70.48 g (0.592 moles) of methyl-diethanolamine, 0.7 g of benzoyl chloride and thereafter 424.95 (2.529 moles) of 1,6-hexane-diisocyanate are added. The exothermic reaction was controlled so that the mass remained for 1 hour at about 60°C; the mass was then heated at 80°C until the free isocyanate group content was about 3.1 to 3.2%. The nitrogen atmosphere was replaced by dry air and the temperature of the reaction mixture was adjusted to 65°C, 213.06 Grams (0.262 moles) of an ethoxylated butanol having a hydroxyl number of 68.8 mgKOH/g and 51.17 g (0.394 moles) of 2-hydroxy-propylacrylate are added to the reaction mixture. The whole was then kept at 65°C until the free isocyanate group content was 1.35 - 1.38%. The reaction mixture was then diluted with 534 ml of acetone and was then salified by the addition of 32 g of 85% formic acid (0.591 moles) diluted with 680 g of deionized water. A further 3320 g of deionized water were added and the acetone is removed by distillation under reduced pressure. The oligourethane dispersion so obtained was again placed under nitrogen, adjusted to 50°C and polymerized by the addition over 2 hours of an initiator (tert-butyl-hydroperoxide, 12% in water, 35.05 g in 115 g of deionized water) and an activator (2.09 g of sodium-formaldehydesulfoxylate in 150 g of deionized water).

The final dispersion had a dry solids content of 32.8% by weight, consisting of a polyurethane containing 28.1 milliequivalents of quaternary ammonium groups and 9.2% by weight of polyoxyethylenic chains, calculated on the dry polyurethane.

### EXAMPLE 3

A 30 x 35 cm piece of a 100% cotton fabric, having a weight of 150 g/m², was impregnated with a solution of 100 g/l of aqueous polyurethane dispersion (prepared as described in Example 1) at 30% dry content and was then squeezed to give a pick-up of 80% and thereafter dried at 120°C to give a polyurethane resin-treated fabric.

10 Grams of the thus treated fabric were dyed in a exhaustion bath according to the following procedure:
(a) a bath of 400 ml of purified water was prepared containing:
   0.0048 g of C.I. Acid Blue 193
   0.1 g of ammonium sulphate, and
   0.2 ml of acetic acid;
(b) the PH of the bath was adjusted to 4.5-5;
(c) the material to be dyed was introduced at 40°C and the bath temperature was raised to 80°C at a rate of 1 degree per minute;
(d) the temperature was maintained at 80°C for a further 60 minutes in order to promote diffusion of the dyestuff into the resin;
(e) the whole was cooled to 70°C and a bath was prepared containing 0.5 g/l of an anionic detergent (Diapon TN);
(f) the fabric was washed with the detergent bath at 70°C for 10 minutes;
(g) the fabric was rinsed out in purified tepid water and was dried at a temperature of about 80°C.

The polyurethane resin was perfectly dyed whilst maintaining the cotton white. Dyeing fastness data are given in Table 1 below.

### EXAMPLE 4

A 30 x 50 cm piece of a 100% cotton fabric, having a weight of 160 g/m², was coated, by means of a doctor blade, with a aqueous dispersion of polyurethane, 30% dry contents, prepared as described in Example 1 and thickened with 2.5% based on the latex, of Borchigel L/75 (a non-ionic thickening agent).

The treated fabric was allowed to dry at 120°C and was then treated at 150°C for 2 minutes to complete film formation. A coating rate of 35 g/m² of polyurethane resin was obtained.

A 15 x 30 cm sample of the coated fabric was padded with the following bath and squeezed between two rolls to give an 80% pick-up. 500 ml of purified water
200 g technical urea.
10 g C.I. Reactive Blue 94.
10 g sodium metabisulfite.
2 g Imbirol OT/Na/45 (Wetting agent sold by Applicant).

The PH of the bath was adjusted to 4.5-5 with acetic acid and the bath was then dilute to 1000 ml with purified water.

The thus impregnated fabric was rolled up on a glass bar, covered with a polyethylene film and then kept at room temperature for 24 hours.

The fabric was then washed with water at 50°C and then at 70°C with a solution of 1 g/l of sodium carbonate for 10 minutes. It was then rinsed with warm purified water (50°C), then with tepid water, acidified with acetic acid to pH 5, and finally the fabric was allowed to dry.

The polyurethane resin is perfectly dyed, while maintaining the cotton white. Dyeing fastness data are reported in Table 1 below.

### EXAMPLE 5

A 50 x 60 cm piece of cotton fabric, having a weight of about 120 g/cm², was screen-printed, with drawings covering 40% of the fabric surface and with 70% absorption, using a printing paste comprising 100 parts by weight of an aqueous dispersion of a polyurethane (30% solids) prepared as described in Example 1, and 2 parts of Borchigel L/75 (non-ionic thickening agent).

The printed fabric was dried at 120°C and was then treated at 150°C for 2 minutes. A coating of polyurethane resin was obtained having a deposition rate of about 25 g/m² in the printed areas.

A 10 g sample of the printed material was exhaustion dyed according to the following procedure:
(a) a bath of 400 ml of purified water was prepared containing:
   0.0168 g of C.I. Reactive Red 100,
   0.2 ml of Dispergal LAC (levelling dispersing agent sold by Applicant),
   acetic acid in an amount sufficient to give a PH of 4.5 - 5;
(b) the printed fabric was introduced into the bath at 40°C and the temperature was raised to 80-85°C over 20 minutes;
(c) the fabric was maintained at 80-85°C for about 40 minutes to exhaust the bath;
(d) without further heating, 2 ml/l of ammonium hydroxide were added to obtain discharge and washing of the non-fixed dyestuff;
(e) the fabric was washed with water at 50°C and was then rinsed with cold water slightly acidified with acetic acid.

The drawings printed with the polyurethane resin were perfectly dyed while preserving the non-impregnated cotton. Dyeing fastness data are reported in Table 1 below.

### EXAMPLE 6

A 40 x 60 cm piece of a napped and sheared 100% cotton fabric having a weight of 220 g/m² was coated, on the pile side, with the aqueous polyurethane dispersion of Example 2, by a transfer technique, by using paper, to obtain an imitation leather.

The process was carried out as follows:
(a) a sufficiently thick paste was prepared adding 5 parts of Borghigel L/75 (non-ionic thickening agent) to 100 parts of the emulsion (30% solids) obtained according to Example 2;
(b) the paste was coated by means of a doctor blade onto release paper (URECAST BNS + RASO BINDA paper) having a thickness of 0.20 mm,
(c) the coated paper was dried at 120°C;
(d) the film supported on the paper was transferred to the cotton fabric by means of a heated press at 90-100°C; the fabric was removed from the paper and was then treated at 150°C for 2 minutes.

An imitation leather was obtained showing the relief drawing of the paper used. The polyurethane deposition rate was 35 g/m².

A 20 x 20 cm sample of the imitation-leather treated fabric was dyed as follows:
(a) a bath of 400 ml of purified water was prepared containing: 0.0028 g of C.I. Acid Red 362,
   0.1 g of ammonium sulphate, and
   0.2 ml of acetic acid;
(b) the PH of the bath was adjusted to 4.5-5;
(c) the fabric sample was introduced into the bath at 40°C and the bath temperature was then raised to 80°C at a rate of 1°C per minute;
(d) the bath was maintained at 30°C for a further 60 minutes to promote diffusion of the dyestuff into the polyurethane;
(e) the whole was cooled to 70°C and a bath was prepared containing 0.5 g of an anionic detergent (Diapon TN);
(f) the fabric was washed with the detergent bath at 70°C for 10 minutes.
(g) the fabric was rinsed with slightly warm purified water and was then dried at about 80°C.

The polyurethane portion, which forms the imitation-leather. was perfectly dyed, whilst the cotton support remained white. Dyeing fastness data are reported in Table 1 below.

### EXAMPLE 7

A 40 x 60 cm sample of a 100% polyamide-6, 6 fabric having a weight of 120 g/m² was coated by means of a doctor blade with the aqueous polyurethane dispersion described in Example 2 (30% dry substance) thickened with 2.5% of Borchigel L/75 (non-ionic thickening agent).

The thus treated fabric was allowed to dry at 120°C and thereafter was treated at 150°C for 2 minutes, to complete film formation. The deposition rate of polyurethane resin was 35 g/m².

A 5 g sample of the coated fabric was dyed as follows:
(a) a 400 ml bath of purified water was prepared containing 0.044 g of Reactive Black 5, the pH being adjusted to 3.5 - 4 with acetic acid;
(b) the treated fabric was introduced into the bath and dyeing was started at 40°C;
(c) the bath was slowly heated raising the temperature to 80-85°C over 30 minutes and this temperature was maintained for a further 30 minutes (until the bath was exhausted);
(d) the PH of the bath was adjusted to about 6-7 by adding sodium bicarbonate and the bath was maintained at this pH for 20-30 minutes;
(e) the fabric was washed with 0.6 g/l of Diapon T at 50°C and was then rinsed and dried.

A blueish-black dyeing was obtained preserving the polyamide fibre. Dyeing fastness data are reported in Table 1 below.

### EXAMPLE 8

A 50 x 60 cm piece of a 100% polypropylene fabric having a weight of 140 g/cm² was printed with drawings covering 35% of the fabric surface and with a local 80% pick-up using a printing paste comprising: 100 parts of aqueous polyurethane dispersion (30% solids, prepared as described in Example 2) and 2.5 parts of Borchigel L/75 (non-ionic thickening agent).

The print was dried at 120°C and was then treated for 2 minutes at 150°C. A polyurethane resin deposition rate of 24 g/m² was obtained on the printed parts.

A 30 x 50 cm sample of the printed fabric was dyed in laboratory jigger as follows:
(a) an aqueous dyeing bath of 500 ml was prepared containing:
   0.118 g of C.I. Acid Violet 90,
   0.1 g of ammonium sulphate, and
   0.2 ml of acetic acid;
(b) the PH of the bath was adjusted to 4.5-5;
(c) the bath was added in two lots to the apparatus containing the fabric (250 ml at the first run, 250 ml at the second run) at a temperature of 40°C;
(d) the temperature of the bath was slowly raised (1 degree per minute) to 80°C;
(e) the temperature was maintained at 80°C for a further 60 minutes.
(f) the whole was cooled to 70°C and a bath was prepared containing 0.5 g/l of an anionic detergent (Diapon TN);
(g) the fabric was washed with the detergent bath at 70°C for 10 minutes and was then rinsed in warm and then in tepid purified water; and
(f) the fabric is dried at about 80°C.

There was obtained a coloured print on a naturally white ground. Dyeing fastness data are reported in Table 1 below.

**TABLE 1**

| EXAMPLES No. | FASTNESS | | |
|---|---|---|---|
| | XENO LIGHT (ISO 105-BO2) | WET WASHING (ISO 102-CO2 | DRY WASHING (ISO 105-DO1) |
| 3 | 4/5 | 4 | 4/5 |
| 4 | 3/4 | 4 | 4/5 |
| 5 | 5/6 | 4/5 | 4/5 |
| 6 | 4/5 | 4 | 4/5 |
| 7 | 3/4 | 4 | 4/5 |
| 8 | 4/5 | 4 | 4/5 |

## Claims

1. A process for improving the dyeability of a woven or non-woven textile which comprises treating the textile, before dyeing, with an aqueous dispersion of a polyurethane having cationic groups randomly distributed in the macromolecule, comprising the reaction product of organic diisocyanate and a mixture comprising a macroglycol and a diol containing a cationisable nitrogen atom, further reacted with an acid or cationising agent.

2. A process as claimed in claim 1 in which the cationic groups are present in the polyurethane in an amount of from 15 to 100 milliequivalents per 100 grams of dry polyurethane.

3. A process as claimed in claim 2 characterised in that the polyurethane also has polyether side or end chains.

4. A process as claimed in claim 3 characterized in that the polyether side or end chains have an average molecular weight of from 500 to 2000, preferably from 500 to 1000.

5. A process as claimed in claim 3 or claim 4 characterised in that the polyether chains are methyl or butyl monoethers of polyoxyethyleneglycol as such or copolymerized with propylene oxide.

6. A process as claimed in any one of claims 3-4 characterised in that the polyether chains are polyoxyethylene chains.

7. A process as claimed in any one of claims 3-6 characterised in that the polyether chains are present in an amount of from 4 to 15% by weight, based on the dry polyurethane.

8. A process as claimed in any one of the preceding claims characterised in that the aqueous polyurethane dispersion has a solids content of more than 10% by weight, preferably from 10 to 50% by weight.

9. A process as claimed in any one of the preceding claims, characterised in that the woven or non-woven textile is based on natural fibres, synthetic fibres or mixed fibres.

## Patentansprüche

1. Verfahren zur Verbesserung der Anfärbbarkeit eines gewebten oder nichtgewebten Textilmaterials, dadurch **gekennzeichnet,** daß das Textilmaterial vor dem Färben mit einer wäßrigen Dispersion eines Polyurethans, welches, randomartig verteilt in dem Makromolekül, kationische Gruppen aufweist, behandelt wird, welches das Reaktionsprodukt aus einem organischen Diisocyanat und einem Gemisch, enthaltend ein Makroglykol und ein Diol mit einem kationisierbaren Stickstoffatom, das zusätzlich mit einer Säure oder einem Kationisierungsmittel umgesetzt worden ist, umfaßt.

2. Verfahren nach Anspruch 1, dadurch **gekennzeichnet,** daß die kationischen Gruppen in dem Polyurethan in einer Menge von 15 bis 100 Milliäquivalent pro 100 g trockenem Polyurethan vorhanden sind.

3. Verfahren nach Anspruch 2, dadurch **gekennzeichnet,** daß das Polyurethan ebenfalls Polyetherseiten- oder -endketten enthält.

4. Verfahren nach Anspruch 3, dadurch **gekennzeichnet,** daß die Polyetherseiten- oder -endketten ein durchschnittliches Molekulargewicht von 500 bis 2000, bevorzugt von 500 bis 1000, besitzen.

5. Verfahren nach Anspruch 3 oder 4, dadurch **gekennzeichnet,** daß die Polyetherketten Methyl- oder Butylmonoether von Polyoxyethylenglykol als solchem oder copolymerisiert mit Propylenoxid sind.

6. Verfahren nach einem der Ansprüche 3 bis 4, dadurch **gekennzeichnet,** daß die Polyetherketten Polyoxyethylenketten sind.

7. Verfahren nach einem der Ansprüche 3 bis 6, dadurch **gekennzeichnet,** daß die Polyetherketten in einer Menge von 4 bis 15 Gew.-%, bezogen auf das trockene Polyurethan, vorhanden sind.

8. Verfahren nach einem der vorhergehenden Ansprüche, dadurch **gekennzeichnet,** daß die wäßrige Polyurethandispersion einen Feststoffgehalt von mehr als 10 Gew.-%, bevorzugt von 10 bis 50 Gew.-%, besitzt.

9. Verfahren nach einem der vorhergehenden Ansprüche, dadurch **gekennzeichnet,** daß das gewebte oder nichtgewebte Textilmaterial auf Naturfasern, Synthesefasern oder Mischfasern beruht.

## Revendications

1. Procédé pour améliorer l'aptitude à la teinture d'un textile, tissé ou non tissé, qui consiste à traiter le textile avant la teinture, avec une dispersion aqueuse d'un polyuréthanne ayant des groupes cationiques distribués au hasard dans la macromolécule, comprenant le produit de la réaction d'un diisocyanate organique et d'un mélange comprenant un macroglycol et un diol contenant un atome d'azote cationisable, que l'on fait en outre réagir aveu un acide ou un agent de cationisation.

2. Procédé selon la revendication 1, dans lequel les groupes cationiques sont présents dans le polyuréthanne en une quantité de 15 à 100 milli-équivalents par 100 grammes de polyuréthanne sec.

3. Procédé selon la revendication 2, caractérisé en ce que le polyuréthanne possède aussi des chaînes latérales ou terminales polyéther.

4. Procédé selon la revendication 3, caractérisé en ce que les chaînes latérales ou terminales polyéther ont une masse moléculaire moyenne de 500 à 2000 et, de préférence, de 500 à 1 000.

5. Procédé selon la revendication 3 ou 4, caractérisé en ce que les chaînes polyéther sont des mono-éther méthyliques ou butyliques du polyoxyéthylèneglycol, en l'état ou copolymérisé avec de l'oxyde de propylène.

6. Procédé selon l'une quelconque des revendications 3-4, caractérisé en ce que les chaînes polyéther sont des chaînes polyoxyéthylène.

7. Procédé selon l'une quelconque des revendications 3 à 6, caractérisé en ce que les chaînes polyéther sont présentes en une quantité de 4 à 15 % an poids par rapport au polyuréthanne sec.

8. Procédé selon l'une quelconque des revendications précédentes, caractérisé en ce que la dispersion aqueuse de polyuréthanne a une teneur en extrait sec supérieure à 10 % en poids et, de préférence, de 10 à 50 % en poids.

9. Procédé selon l'une quelconque des revendications précédentes, caractérisé en ce que le textile tissé ou non tissé est à base de fibres naturelles, de fibres synthétiques ou de fibres mélangées.
